Europäisches Patentamt

European Patent Office

Office européen des brevets

(19)

(11) Publication number: **0 045 729**
**B1**

(12) **EUROPEAN PATENT SPECIFICATION**

(45) Date of publication of patent specification: **02.01.86**

(51) Int. Cl.⁴: **B 05 C 15/00, B 01 D 46/22**

(21) Application number: **81850127.2**

(22) Date of filing: **20.07.81**

(54) **Apparatus for air cleaning in conjunction with spray painting.**

(30) Priority: **01.08.80 SE 8005516**

(43) Date of publication of application:
**10.02.82 Bulletin 82/06**

(45) Publication of the grant of the patent:
**02.01.86 Bulletin 86/01**

(84) Designated Contracting States:
**AT BE CH DE FR GB IT LI NL SE**

(56) References cited:
**DE-A-1 507 878**
**DE-C- 269 281**
**DE-C- 531 191**
**DE-C- 692 801**
**FR-A- 551 669**
**FR-A-2 396 581**

(73) Proprietor: **Engwall, Olof**
**Ekbackevägen 18**
**S-181 46 Lidingö (SE)**

(72) Inventor: **Engwall, Olof**
**Ekbackevägen 18**
**S-181 46 Lidingö (SE)**

(74) Representative: **Burman, Tore et al**
**Bergling & Sundbergh AB P.O. Box 7645**
**S-103 94 Stockholm (SE)**

Courier Press, Leamington Spa, England.

## Description

Technical Field

The present invention relates to an apparatus for cleaning air which has been polluted or contaminated by sticky or glutinous particles such as paint or lacquer particles obtained during paint spraying. The apparatus is of the kind comprising a filter means including a movably arranged material web, and means for evacuating the polluted or contaminated air through said web so that the pollutants or contaminants are separated from the air passing through. The apparatus is particularly suitable for being a part of a defining surface in a paint spraying space, e.g. a wall in a spray booth or the like.

Background Art

An apparatus of the kind mentioned above is previously known, e.g. from the US—A—2,841,073. This known apparatus includes a disposable, highly absorbent fabric cloth or curtain, hanging as an inner filter wall in a spray booth and through which air charged with paint is sucked. The fabric curtain, which thus has a conventional felted or porous structure, starts from an upwardly arranged storage roll and its lower portion is received in a downwardly arranged collecting trough. When an exposed length of the fabric curtain has taken up a given quantity of paint, a new dray section is rolled from the storage roll simultaneously as the consumed portion is collected in the collection trough. When the entire roll has been used, a new one is put in place and the filter material web polluted by the paint it has taken up, and collected in the collecting trough, is thrown away.

Although there is the advantage with an apparatus of this kind of avoiding the usual work with paint-separating curtains or cascades of water, to which are added various chemicals, the disadvantages involved, such as a nonuniform effect due to increasing clogging of the filter material web and frequently repeated exchanges of the latter with accompanying high costs, have meant that the apparatus has not obtained any practical importance.

It has also been previously proposed mere air filters, i.e. filters for removing dust etc. from ventilation air, these filters comprising an endless, circulating, oil-soaked filter material web through which the ventilation air is sucked (c.f. US—A—2.144.451, for instance). The filter material web, which is caused to pass through an oil trough for removing collected dust particles and for being soaked with oil, has a conventional filter structure, i.e. it includes a felted or porous material such as aluminium wool, of not unconsiderable thickness. The filter material web is built up of filter material sections which are connected to each other via stiff impermeable transverse members, whereby the filter material web can accommodate itself to the return means or turnstiles over which it passes.

An air filter of this kind is impossible to use in conjunction with paint spraying, since in such a case it would be clogged up by the large amount of sticky or glutinous paint or laquer particles which are taken up. It can also be noted that air filters of this kind now have not even any practical use of importance for cleaning ventilating air.

DE—C—531 191 discloses an apparatus for removing paint dust from evacuated air, the air being sucked through endless bands provided with holes. After having taken up paint dust, the endless bands can be passed through a solvent or a cleaning agent in a container by means of handles driving rollers around which the endless bands are passed. The bands are in fact conventional dry labyrinth filter means which can be washed, when needed, by being passed through the cleaning liquid in the container. An apparatus of this kind is not suitable for cleaning air which has been heavily polluted by paint particles and will not give a high separation capacity.

Object of the Invention

The object of the present invention is to provide an improved apparatus of the general kind given in the introduction, with which there is gained a number of advantages such as:

No risk of the filter means being clogged;

Simplified maintenance due to self-cleaning effects and small waste amounts which can easily be destroyed;

Extremely good separation capacity;

Very uniform evacuation;

Very low noise level;

Very low material consumption;

No use of chemicals is required;

Low energy consumption;

Low operating costs.

Summary of the Invention

The above-mentioned object is achieved by the apparatus in accordance with the invention being given the characterizing features disclosed in the accompanying claims.

The apparatus in accordance with the invention thus comprises at least one filter means including an endless moving filter, said filter means being preferably intended to constitute a portion of a wall in a processing booth; means for controlled driving of the endless band for circulatory movement round at least a first and a second return or deflecting means, a first exposed part or part portion of the band being arranged for being passed through by the contaminated air; liquid supply means for supplying at least the exposed part or part portion of the band with a liquid taking up the contaminants entrained in the air passing through the band; and means for evacuating polluted or contaminated air through said exposed part or part portion so that the contaminants are separated from the air flowing through, and the apparatus is characterized in that the endless band is of a thin substantially solid material having at least a coating of polytetrafluoroethylene, the band having a substantially smooth surface and direct through-holes or perforations, substantially evenly distributed over the band, for the passage of air; in that the liquid is an oil such as paraffin oil which wets the band; and in that scraper means are arranged for coaction with the surface of the band for removing contaminants from the band which have been separated from the air and taken up by the oil.

The contaminants separated from the air will substantially be taken up by the liquid on the endless band, and removal thus substantially means the removal of contaminated liquid from the band, before the latter, provided with new liquid, continues once again to run over the air filtering and particle collecting passage. One and the same liquid is preferably utilized, this liquid being circulated, i.e. the removed contaminated liquid is collected for re-use. This means very low liquid consumption and can suitably be carried out by means of a liquid container. In conjunction with the collection, taken-up contaminants can settle for later removal. This purification of the liquid can also be performed in a separate purification or sedimentation vessel, to which collected liquid is taken either continuously or at given time intervals, depending on how contaminated the liquid is.

The scraper means for removing contaminated liquid from the endless band are arranged advantageously in a liquid container, especially submerged in the liquid therein, coacting with the outside of the band. The scraper means gives a deflecting effect, removing contaminated liquid from the endless band without unnecessarily stirring or agitating the paint in the liquid. Thus, only a small volume of liquid is required in the container.

The endless band is thin (with a typical thickness of the order of magnitude of 1 mm) and easily flexible in its circulation direction. The rear surface of the band is also suitably substantially smooth or uniform, and the perforations in the band are distinct through-holes, preferably in a compact or solid material. The band shall thus not have a felted or similar structure, e.g. such as would enable paint particles to fasten in it and clog it up.

The endless band will have a surface structure allowing easy removal of contaminants taken up, thus being particularly well-suited to coaction with scraper or stripping means. For this purpose it can suitably have a completely smooth, glossy and homogeneous surface, which has the necessary orifices or perforations for the direct passage of air. The material of the band should not be affected by the liquid or solvent in the paint taken up, but should be wetted by the liquid. Thus, the band having a suitable width, consists of, or is coated with a plastics material, the plastics material being polytetrafluoroethylene (PTFE; Teflon®).

According to the invention, the liquid used is an oil that wets the band well. Organic oils have been found to be particularly suitable, more specifically oils of the hydrocarbon type, preferably substantially made up from unsubstituted hydrocarbons.

Paraffin oil is a particularly preferred liquid. Another example of a liquid is castor oil.

The utilized liquid has a suitable viscosity, so that it can accompany upwardly-going parts of the endless band, and so that it is only insignificantly entrained by the air flowing through the band. It has a specific weight differing from the specific weight of collected contaminants, so that the latter can easily be separated from the liquid in a liquid container. Furthermore, the liquid used does not react with contaminants such as paint or solvent included in the paint, nor does it unfavourably act on the band or other elements with which it comes into contact. It is not volatile.

The combination of a PTFE band and an oil such as paraffin oil has proved to be extremely advantageous with regard to avoiding clogging, and with regard to smooth and silent operation and excellent scraper coaction.

The perforations of the band, or the orifices made in an equivalent way, which allow air to pass through the band, are preferably made so that evacuation will be substantially uniform over the whole of the exposed band portion. In this way there is generally obtained very advantageous uniform airflow conditions, e.g. in the spray booth in which the apparatus is incorporated. This evenly distributed evacuation can usually be obtained by having substantially equally-sized holes distributed substantially uniformly over the exposed portion of the endless band. However, for obtaining special marginal effects with respect to the flow conditions, for example, it is possible to have a different size of hole at the edge or marginal areas of the exposed portion of the band. It is also possible to allow some parts of the band to be unperforated, e.g. where the band may require support against the suction action, such as at the middle of the band if the band has great width.

The favourable airflow conditions achieved by the apparatus in accordance with the invention means that smaller quantities of air can be evacuated with retained good separating effect, as well as operation with lower airflow speeds, this being advantageous from the point of view of noise, energy and investment. It is thus possible to utilize more slender dimensioned evacuation fans and ducts than previously. It is thus not necessary to process greater amounts of evacuated air than what is required according to current regulations.

Both with regard to the separating effect as well as the noise and the suction effect, the size of the holes and the total hole area is, of course, of importance. It has been found suitable to have a total hole area which is between about 2 and about 20%, particularly between about 5 and about 10%, and preferably about 7% of the total exposed band surface. The holes can suitably have a largest opening dimension, especially diameter, which is between about 0.5 and about 3 mm, preferably about 1 mm. A suitable airflow rate through the holes can be between about 3 m/s and about 15 m/s, typically 7—7 m/s.

It should be emphasized that the flow of air, on passing into the holes in the band in the apparatus in accordance with the invention, is of a nature such that a special separating effect is achieved. As a result of the special flow conditions, the air mass loaded with particles moves substantially linearly towards the exposed band. The air is deflected and sucked through the holes in the band first when it is very close to the band. However, the majority of the particles entrained in the air do not have time to be deflected sufficiently for being sucked into the holes, but strike, and remain on the liquid-coated band between the holes. To a certain extent, the particles moving substantially straight towards holes in the band will be taken up by the liquid in and around the holes. Particles passing through the holes have been found to have a tendency to be deposited around the rear opening of the holes, as a result of the air sucked through the holes being deflected back towards the rear side of the band to some extent. The particles, which nevertheless accompany the air to the rear part of the band, will be separated there by effects similar to those already described for the front part of the band.

Since the air which is sucked out by the air evacuation means thus suitably first passes through a front or upper exposed part or part portion of the endless band, and thereafter through a second or rear part or part portion, the majority of the contaminants carried by the evacuated air will be taken up on the exposed band part simultaneously as a further very good post-filtration takes place at the second band part. It has been found that this gives extremely effective total filtration. Thus, at least 90—95% of the contaminants such as paint can be taken up at the front part of the band, and in total more than 99% of the contaminants can be taken up in the filter. If supplementary filtration should be desirable, a more conventional extra filter can be arranged, as will be accounted for later.

In order to obtain a good separating effect, it is important that the band is evenly, and suitably overflowingly, provided with liquid. The liquid (which preferably circulates in the apparatus) should not contain too many previously collected contaminants, when it is supplied to the endless band. Although the nature of the liquid is of importance in this connection, it is often sufficient for the supply of liquid to arrange the previously-mentioned liquid container so that the endless band passes through the container after having taken up contaminants, partly to be liberated from heavily contaminated liquid and partly to take up new liquid. This new liquid accompanies the band during its course through the rear passage, over return or deflecting means and via the front passage back again to the liquid container, where it arrives with entrained particles. The separated contaminants can settle in the container protected by the liquid. In some cases it is thus possible to use separated paint again.

If so desired, separate or extra liquid supply can, of course, be arranged in one or more places.

For example means can be provided for flushing or drenching the band with liquid before or in conjunction with the exposure of the band, so that its front exposed part obtains such a rich supply of liquid that large quantities of contaminants can be taken up without any problem.

Advantageously, the band can be arranged to coact with a return or deflecting means (preferably arranged to be at least partially submerged in the liquid in a liquid container) which is formed, e.g. as a roller, such that when the band passes over the return or deflecting means, liquid is pressed through the perforations in the band from its inside to its outside as a result of the wedging action between the return or deflecting means and the inside of the band, whereby a self-cleaning effect is obtained, which means that contaminants deposited in the band perforations and on the rear of the band to a large extent are brought out onto the outside or front side of the endless band for mechanical removal by a following scraping or stripping means. Although this self-cleaning effect has the greatest importance in the front portion or part of the band when it passes through a liquid container, for example, a similar effect has importance for bringing contaminants at an upper return means from the front side to the rear side of a second or rear band part.

With the object of improving the removal of contaminants from the band, means can also be arranged for forcing liquid through the band at an increased pressure from its inside to its outside, suitably in conjunction with the band passing through the liquid in a liquid container, whereby contaminants deposited in the perforations and at the perforations on the rear side of the endless band are brought out to the outside of the band. These means for forcing liquid through the band can comprise a liquid delivery nozzle connecting to a return or deflecting means and to the inside of the endless band, and which define a wedge-shaped space therebetween, and means for feeding liquid at increased pressure to said liquid delivery nozzle.

It is also possible to allow a roller-shaped return or deflecting means to be provided with stud-like projections which are arranged for engaging in the through-holes of the band to clean them when the band passes by. A separate means, with similar construction and effect, can also be arranged.

According to a preferred design, the endless band and the associated return or deflecting means are made in the form of a separate exchangeable cassette. Such a design has proved to alleviate problems with regard to operational reliability, handling, exchange etc, while simultaneously the cleaning capacity can be varied very easily by providing two or more standard cassettes in parallel. The cassette design has proved to remove problems due to the delicate nature of a thin solid endless band of PTFE.

With regard to the drive of the endless band, the drive preferably should be continuous, while the process giving rise to pollution is in progress, but intermittent operation is in itself possible when conditions so allow, and the liquid distribution on the band will still be satisfactory.

A suitable operating speed for the band has been found to be between about 0.5 m/s and about 0.5 m/s, especially between about 0.1 m/s and about 0.3 m/s.

As previously mentioned, an extra filter can be arranged so that the evacuated air passes through it after first having passed through the rear part of the endless band. The extra filter is suitably arranged before possible fan means and outlet ducts. This filter will catch both remaining particles and entrained liquid. In view of the nature of the latter, it can give the extra filter a self-cleaning effect, in as far as the liquid, after having saturated the filter, flows down from it into a collecting vessel underneath, or directly into the liquid container, while carrying with it particles deposited on the extra filter.

Brief Description of the Drawings

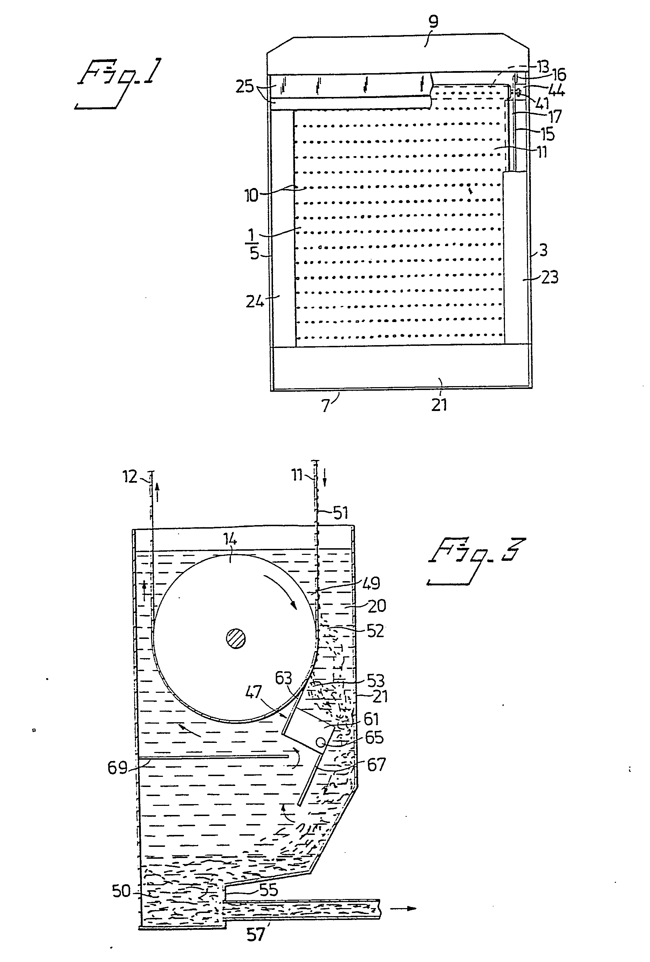

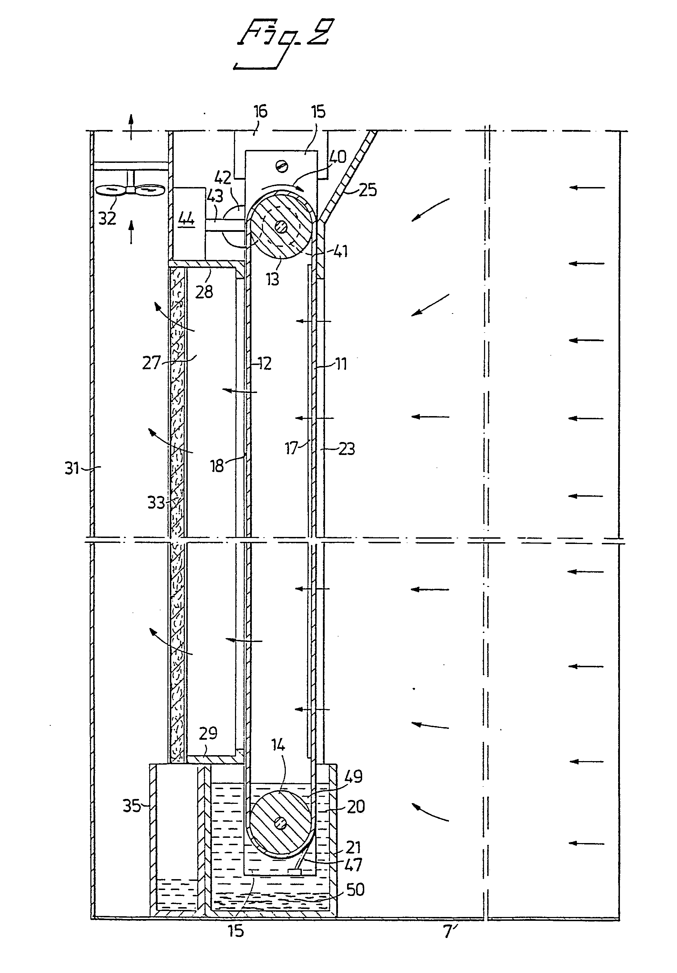

An embodiment of the apparatus in accordance with the invention, as well as some modifications thereof, are illustrated in the accompanying drawings. In the drawings, Fig. 1 is a front view of a spray booth including an apparatus in accordance with the present invention, certain cover plate parts being removed for the purpose of clarification; Fig. 2 is a partial longitudinal sectional view of the booth of Fig. 1; Fig. 3 is a schematic, partial, sectional view illustrating a modification of the apparatus of Figs. 1 and 2; Fig. 4 is a schematic, partial, sectional view illustrating another modification of the apparatus of Fig. 1 and 2; Fig. 5 is a schematic, partial, sectional view illustrating a still further modification of the apparatus of Fig. 1 and 2; and Fig. 6 is a schematic view of a modification of the apparatus in accordance with the invention involving circulation of the utilized liquid with separation of collected paint in a separate sedimentation vessel.

Description of Embodiment

In Figs. 1 and 2 there is shown an apparatus in accordance with the invention, incorporated in a spray booth, the apparatus in accordance with the invention constituting the rear or inner wall 1 in the spray booth, which further includes side walls 3 and 5, a floor 7 and a ceiling portion 9.

The vertically arranged apparatus includes a filter cassette with an endless material web 11, 12 in the form of a band with a width such as to extend substantially over the whole width of the booth. The band is taken over and guided by an upper, horizontally extending, return and driving roller 13, and a bottom horizontally extending return roller 14. Rollers 13, 14 are rotatably mounted in, and connected two like cassette cheek plates, of which only one 15 is shown in Figs. 1 and 2. At the top, cheek plates 15 (and thereby the filter cassette) are suspended from brackets 16 in the ceiling portion 9 of the booth, and are easily removable from the brackets.

The bottom portion of the filter cassette, including the lower return roller 14, hangs down in paraffin oil 20 in a container 21, arranged on the spray booth floor 7, this container extending across the whole of the spray booth width.

The band 11, 12 comprises solid PFTE with a smooth surface, and has reinforced edge or marginal areas and evenly distributed through-holes 10, except in the marginal areas, with a typical hole size of about 1 mm and with a total hole area of about 7% of the exposed surface.

For guiding the front vertical part 11 and rear parallel part 12 of the endless band, the cheek plates are provided with inwardly projecting flanges 17, 18 extending substantially along the whole length of the cheek plates between rollers 13, 14. A front flange 17 projects behind the front band part 11 at a distance from the front edge of cheek plate 15 somewhat exceeding the band thickness. A rear flange 18 projects behind the rear band part 12 level with the rear edge of cheek plate 15. Flanges 17, 18 project approximately to where the exposed or operative area of the filter band begins, i.e. the flanges guide the marginal areas of the band.

For defining and framing-in the exposed operative portion of the endless band's front part (said portion constituting substantially the whole of the front part) above the liquid container 21, as well as for fixing the filter cassette, there are two side cover plates 23, 24 and an upper cover plate 25, which joint onto the side walls 3, 5 and ceiling portion 9, respectively, of the spray booth. The side cover plates cover the marginal areas of the endless band and adjoin the front edges of cheek plates 15. Upper cover plate 25 has an upper outwardly angled portion connecting to the ceiling thus giving favourable airflow conditions, and a lower portion connecting to the front edges of cheek plates 15 and extending downwards to just under upper return roller 13 close to the endless band's front part 11.

On its rear side, the filter cassette is connected to an evacuation system via a connection means, made as a box-like frame, the side members 27 of which (only one member visible in Fig. 2) are arranged to engage against the rear edges of cheek plates 15, and the upper and lower cross members 28 and 29, respectively, of which are arranged to be close to the endless band's rear part 12. The through-opening of the connection means corresponds to the exposed portion of the endless band's front part.

The connection means is connected to an evacuation duct 31 having an evacuation propeller fan 32 via vertically arranged extra filter 33. There is a collection container 35 arranged under the extra filter for collecting oil and possible entrained paint accumulating at the filter and dropping down from it.

Means are arranged for driving upper roller 13 to drive the endless band in the direction indicated by arrow 40. These driving means include a first driving wheel 41 secured on the shaft of roller 13 and on the other side of cheek plate 15, and a second driving wheel 42 which is coupled to an electric motor 44 via coupling means 43, not shown in closer detail. Driving wheels 41 and 42 are made such that they simply and securely go into driving mesh with each other when the filter cassette is hung up in brackets 16 and is caused to come into engagement against connection means 27, 28, 29 and is fixed by means of cover plates 23, 24, 25.

For removing taken-up paint from endless band 11, 12 when it passes through liquid container 21, a scraper or stripping means 47 is arranged on the filter cassette for coaction with the band when it passes around lower return roller 14. The scraper is flexible and engages lightly against the band at a point shortly after the band has come into contact with the roller. In this way the removal of paint from the band will be facilitated by the wedging action occurring in the wedge-shaped space 49 between the smooth roller and the approaching band, and which forces out the paint taken up in the band holes to the outside of the band. The scraper, which can be made from rubber material, extends over the whole width of the endless band. Of course, the scraper also could be suspended in the liquid container itself, on the bottom of which separated paint 50 is collected. This separated paint can easily be removed either continuously or at suitable intervals.

It should be emphasized here that the separated paint 50 is shielded under oil 20, and therefore does not dry or oxidize, and in certain cases it can be used again. The protective effect of oil 20, as well as the fact that separated paint is rapidly taken down into container 21, furthermore means that there can be small discharge from the apparatus of solvent incorporated in the paint.

In operation, air is sucked through the moving, endless perforated band 11, 12, as is indicated by arrows in Fig. 2. The band is soaked by paraffin oil, which accompanies the band when its rear part 12 goes up out of the paraffin oil 20 in container 21. By the band being soaked by oil, there are no problems with friction where the band rubs against other parts (e.g. flanges 17, 18 as a result of the backward pull of the suction on both parts of the band).

Circulation of the oil in the apparatus means that the apparatus is continuously subjected to a purification process, which together with the previously described self-cleaning effects for the band 11, 12 and extra filter 33 results in that service of the apparatus is extremely simplified. The obtained automatic concentration of the separated contaminants furthermore means that destruction thereof (if such is necessary) is facilitated. Destruction is also facilitated by the fact that the oil-soaked contaminants can be quite simply burnt up in many cases.

A modified embodiment of liquid container 21 and scraper 47 is illustrated very schematically in Fig. 3; the removal of paint 51 taken up on band 11 by means of wedging and scraping action being illustrated at the same time (at 52 and 53, resp.).

Liquid container 21 in this embodiment has a backwardly and downwardly decreasing area towards a rearwardly placed collection pocket 55, from which collected paint 50 is arranged to be sucked away via a pipeline 57, e.g. for further separation and re-use.

Scraper 47 includes a scraper blade 63 attached to a transverse support and screen element 61. Element 61 is pivotably arranged on a shaft 65 journalled in the side walls of container 21, shaft 65 being eccentrically arranged such that scraper blade 63 engages against band 11 by gravity. A downwardly directed screen plate 67 is attached to the forward portion of element 61, and opposingly arranged with respect to scraper blade 63. Screen plate 67 together with a horizontal screen plate 69 projecting from the rear walls of the container 21 under roller 14, contributes to cause paraffin oil, liberated from paint, to flow up on the rear side of roller 14 and is conveyed on the rear part of the endless band. The liquid level in container 21 is such that roller 14 is covered by liquid and that there is some circulation of the liquid in the container, whereby deposition of paint 50 on the bottom of the container is facilitated.

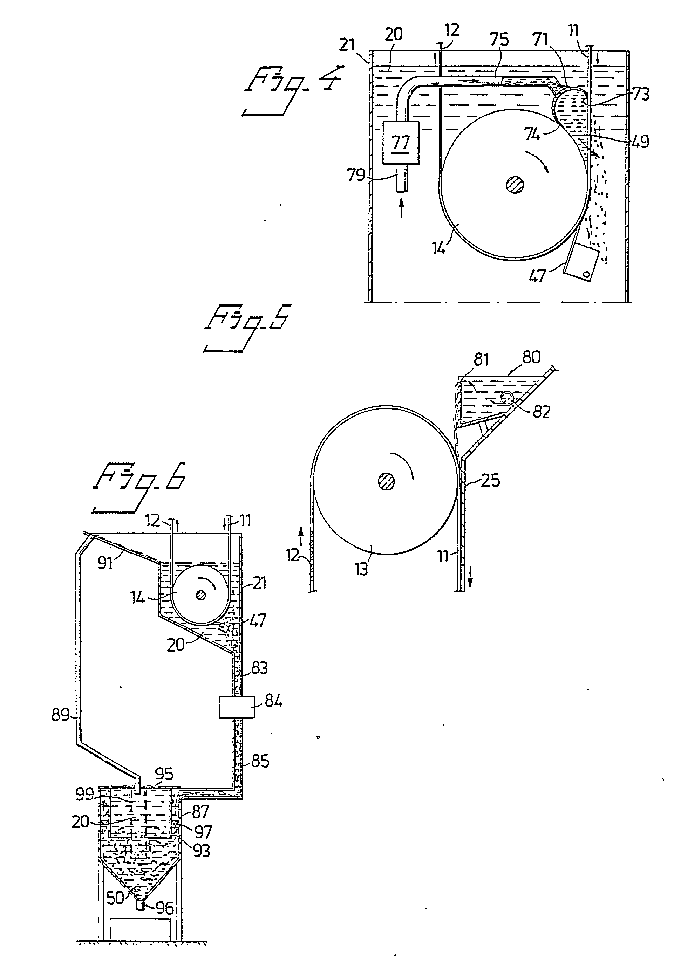

In Fig. 4, there is similarly very schematically shown a modification of the apparatus of Figs. 1 and 2, meaning that liquid 20 in container 21 is forced through the front part 11 of the band at a slightly increased pressure for the purpose of cleaning holes, just when front part 11 approaches roller 14 and scraper means 47, i.e. when the band is at the previously-mentioned wedge-shaped area 49. For this purpose there is provided a trough-like or slot-like elongate nozzle 71 so that its longitudinal edges have flexible lips 73, 74 engage against band part 11 and roller 14, resp. Nozzle 71 is supplied with liquid via a pipe 75 from a pump 77, the inlet pipe 79 of which sucks liquid from container 21.

In Fig. 5, there is very schematically shown, how an apparatus of Figs. 1 and 2 can be supplemented by means for supplying extra liquid to the endless band's front part 11. Thus, a liquid container 80 extending along the length of roller 13 is attached to upper cover plate 25, the container having an overflow edge 81. Container 80 is fed via a pipe 82 and a pump (not shown) with liquid from container 21, so that liquid flows out over edge 81 and down onto the endless band in conjunction with the latter passing between roller 13 and the bottom edge of plate 25. A very uniform distribution of a lavish amount of liquid is hereby obtained on the endless band's forward part 11.

An alternative embodiment of the liquid container is schematically illustrated in Fig. 6, special means being connected to the container for separating or sedimenting the paint particles taken up by the liquid and subsequent recycling of clean liquid to the container. Said special means include a pipe 83 connected to the tapering bottom portion of container 21 for discharge of contaminated liquid from the liquid container, a pump 84 connected to pipe 83, a pipe 85 connected to the outlet side of the pump and opening out into a closed sedimentation vessel 87, and a pipe 89 connected to the sedimentation vessel for recycling liquid 20 liberated from paint particles 50, said pipe 89 opening out in a plate 91 sloping backwards and upwards from the rear wall of liquid container 21. The plate is adapted to extend under an extra filter (not shown here) of a kind already mentioned, for catching liquid dropping down therefrom, recycling of clean liquid from the pipe taking place at a level such that the liquid dropping down from the extra filter is flushed by clean liquid recycled to the upper part of the liquid container via plate 91.

The upper part of sedimentation vessel 87 is cylindrical and has an inner cylindrical screening plate 93 connected to, and downwardly projecting from the lid portion 95 of the vessel, so that a relatively narrow annular gap 97 is formed between plate 93 and the wall of vessel 87. Pipe 85 opens out tangentially in gap 97 at the top thereof, and pipe 89 is connected to the middle of lid portion 95, the opening of pipe 89 being surrounded by a tubular strainer means 99, extending below the lower edge of plate 93. When pump 84 is in operation, liquid polluted with paint particles is thus pumped from container 21 into gap 97, in which it sinks downwards while rotating and flows past the lower edge of screening plate 93 and inwards and upwards in vessel 87. Simultaneously the corresponding amount of liquid is forced out into pipe 89 inside strainer means 99. When pump 84 is not in operation, there is a sedimentation of paint particles towards the bottom of vessel 87, as well as some deposition of paint particles towards the bottom of container 21. As will be understood, the operating condition of the pump can be controlled (rate of liquid circulation; continuous or intermittent operation) so that there is adjustment to prevailing operating conditions and so that the best sedimentation effect is achieved in the sedimentation vessel.

When a given quantity of separated paint 50 is collected at the bottom of the sedimentation vessel, which can be downwardly conical, for instance, this paint can be simply tapped off by bottom emptying means 96, a suitable quantity of clean liquid being refilled, e.g. in the liquid container or upwardly in the sedimentation vessel.

It is, of course, possible to utilize two or more sedimentation vessels, which are alternatingly for the same liquid container, and after changing of the vessels, the one from which paint sediments are to be emptied can stand undisturbed a given time before this is done.

It will be understood that with a liquid circulation system of the kind described above, in combination with the construction of the apparatus in other respects, there is achieved that the spray booth itself can be utilized practically without any interruption in operation for cleaning etc., as well as that the liquid container can contain a smaller amount of liquid.

The invention is naturally not limited to the described embodiments, but further alterations and modifications are possible within the scope of the following claims.

## Claims

1. Apparatus for cleaning air which has been polluted or contaminated by paint particles during spray painting, comprising at least one filter means including and endless moving filter band (11, 12), said filter means being preferably intended to constitute a portion of a wall in a processing booth; means (41—44) for controlled driving of the endless band for circulatory movement round at least a first and second return or deflecting means (13, 14, respectively), a first exposed part or part portion (11) of the band being arranged for being passed through by the contaminated air; liquid supply means (21; 80, 81, 82) for supplying at least the exposed part or part portion of the band with a liquid (20) taking up the contaminants entrained in the air passing through the band; and means (27—29, 31, 32) for evacuating polluted or contaminated air through said exposed part or part portion so that the contaminants are separated from the air flowing through, characterized in that the endless band (11, 12) is of a thin substantially solid material having at least a coating of polytetrafluoroethylene, the band having a substantially smooth surface and direct through-holes or perforations (10), substantially evenly distributed over the band, for the passage of air; in that the liquid is an oil such a paraffin oil which wets the band; and in that scraper means (47; 71, 73—75, 77, 79) are arranged for coaction with the surface of the band for removing contaminants from the band which have been separated from the air and taken up by the oil.

2. Apparatus as claimed in claim 1, characterized in that the band material has a thickness of the order of 1 mm.

3. Apparatus as claimed in any one of the preceding claims, characterized in that the area of the holes (10) is between about 2 and about 20%, especially between about 5 and about 10%, preferably about 7% of the operational area of the band (11, 12).

4. Apparatus as claimed in any one of the preceding claims, characterized in that the holes (10) have a greatest aperture dimension, especially diameter, which is between about 0.5 mm and about 3 mm, preferably about 1 mm.

5. Apparatus as claimed in any one of the preceding claims, characterized in that said scraper means (47) coacting with the endless band (11, 12) are immersed in oil (20) in an oil container (21).

6. Apparatus as claimed in any one of the preceding claims, characterized in that said liquid supply means include a container (21) containing the oil (20), through which the endless band (11, 12) is arranged to pass.

7. Apparatus as claimed in any one of the preceding claims, characterized in that it includes a return or deflecting means (14) for the endless band (11, 12) which is at least partially immersed in oil (20) in an oil container (21) and which is so made that when the band, after having been exposed and having taken up contaminants, passes over the return or deflecting means, liquid is forced through the band from its inside to its outside as a result of the wedging action between the return or deflecting means and the inside of the band, whereby contaminants deposited in the perforations or holes in the band are taken to the outside of the band.

8. Apparatus as claimed in any one of the preceding claims, characterized in that means are arranged for pressing liquid at increased pressure through the band (11, 12) from its inside to its outside, preferably in conjunction with the band passing through oil (20) in an oil container (21), so that contaminants deposited in the perforations or holes of the band are taken to the outside of the band.

9. Apparatus as claimed in claim 8, characterized in that said pressing means include an oil discharging nozzle (71), which connects to a return or deflecting means (14) for the endless band and to the inside of the endless band (11) and which defines a wedge-shaped space (49) therebetween, and means (75, 77, 79) for feeding oil at increased pressure to the oil discharging nozzle.

10. Apparatus as claimed in any one of the preceding claims, characterized in that said liquid supply means (80, 81, 82) for flushing the endless band (11) with oil before, or in conjunction with the endless band being exposed.

11. Apparatus as claimed in any one of the preceding claims, characterized in that said evacuation means (27—29, 31, 32) are arranged for sucking air further through a second part or part portion (12) of the endless band, said liquid supply means (21) being adapted for supplying the second part or part portion (12) with oil (20) taking up contaminants.

12. Apparatus as claimed in any one of the preceding claims, characterized in that the endless band (11, 12) and the return or deflecting means (13, 14) are made in the form of a separate exchangeable cassette.

13. Apparatus as claimed in any one of the preceding claims, characterized in that it comprises means (21) for collecting contaminated oil removed from the endless band (11, 12), means (83—85, 87) for separating the contaminants in the collected oil, and means (84, 89, 91) for recirculating thus cleaned oil to said liquid supply means (21).

14. Apparatus as claimed in claim 13, characterized in that said separating means include a separate sedimentation vessel (87).

**Patentansprüche**

1. Vorrichtung zur Reinigung von Luft, die durch Anstrichmittelteilchen beim Spritzlackieren verunreinigt wurde, mit wenigstens einer Filtereinrichtung, die ein endloses sich bewegendes Filterband (11, 12) enthält, wobei diese Filtereinrichtung vorzugsweise dazu bestimmt ist, einen Teil einer Wand in einer Behandlungskabine zu bilden, einer Einrichtung (41—44) zum gesteuerten Antreiben des Endlosbandes für eine Umlaufbewegung um wenigstens eine erste und eine zweite Umkehr- oder Umlenkeinrichtung (13 bzw. 14), einem ersten freiliegenden Teil oder Teilabschnitt (11) des Bandes, der so angeordnet ist, daß er von der verunreinigten Luft durchströmt wird, einer flüssigkeitsliefernden Einrichtung (21; 80, 81, 82) zur Lieferung einer Flüssigkeit (20), die die in der durch das Band gehenden Luft mitgerissenen Verunreinigungen aufnimmt, an wenigstens den freiliegenden Teil oder Teilabschnitt des Bandes, sowie Einrichtungen (27—29, 31, 32) zum Saugen von verunreinigter Luft durch den freiliegenden Teil oder Teilabschnitt derart, daß die Verunreinigungen von der durchströmenden Luft abgetrennt werden, dadurch gekennzeichnet, daß das Endlosband (11, 12) aus einem dünnen, im wesentlichen festen Material mit wenigstens einem Polytetrafluoräthylenüberzug besteht, wobei das Band eine im wesentliche glatte Oberfläche und direkte Durchgangslöcher oder Perforationen (10), welche im wesentlichen gleichmäßig über das Band verteilt sind, für den Durchtritt von Luft hat, daß die Flüssigkeit ein Öl, wie ein Paraffinöl, das das Band benetzt, ist und daß Abstreichereinrichtungen (47; 71, 73—75, 77, 79) für ein Zusammenwirken mit der Oberfläche des Bandes zur Entfernung von Verunreinigungen von dem Band, die von der Luft abgetrennt und von dem Öl aufgenommen wurden, angeordnet sind.

2. Vorrichtung nach Anspruch 1, dadurch gekennzeichnet, daß das Bandmaterial eine Dicke in der Größenordnung von 1 mm hat.

3. Vorrichtung nach einem der vorausgehenden Ansprüche, dadurch gekennzeichnet, daß die Fläche der Löcher (10) zwischen etwa 2 und etwa 20 %, besonders zwischen etwa 5 und etwa 10 %, bevorzugt etwa 7 % der Arbeitsfläche des Bandes (11, 12) beträgt.

4. Vorrichtung nach einem der vorausgehenden Ansprüche, dadurch gekennzeichnet, daß die Löcher (10) eine größte Öffnungsabmessung, besonders einen Durchmesser haben, die bzw. der zwischen etwa 0,5 mm und etwa 3 mm, vorzugsweise etwa 1 mm ist.

5. Vorrichtung nach einem der vorausgehenden Ansprüche, dadurch gekennzeichnet, daß die Abstreichereinrichtung (47), die mit dem Endlosband (11, 12) zusammenwirkt, in Öl (20) in einen Ölbehälter (21) eintaucht.

6. Vorrichtung nach einem der vorausgehenden Ansprüche, dadurch gekennzeichnet, daß die flüssigkeitsliefernde Einrichtung einen das Öl (20) enthaltenden Behälter (21) enthält, durch welchen das Endlosband (11, 12) zu gehen angeordnet ist.

7. Vorrichtung nach einem der vorausgehenden Ansprüche, dadurch gekennzeichnet, daß sie eine Umkehr- oder Umlenkeinrichtung (14) für das Endlosband (11, 12) enthält, die wenigstens teilweise in Öl (20) in einem Ölbehälter (21) eintaucht und die so gestaltet ist, daß, wenn das Band nach seinem Freilegen und nach dem Aufnehmen von Verunreinigungen über die Umkehr- oder Umlenkeinrichtung geht, Flüssigkeit durch das Band von seiner Innenseite zu seiner Außenseite als Ergebnis der Verkeilungswirkung zwischen der Umkehr- oder Umlenkeinrichtung und der Innenseite des Bandes gezwungen wird, wobei auf den Perforationen oder Löchern in dem Band abgelagerte Verunreinigungen zur der Außenseite des Bandes geholt werden.

8. Vorrichtung nach einem der vorausgehenden Ansprüche, dadurch gekennzeichnet, daß Einrichtungen zum Pressen von Flüssigkeit mit erhöhtem Druck durch das Band (11, 12) von seiner Innenseite zu seiner Außenseite, vorzugsweise in Verbindung mit dem Durchgang des Bandes durch Öl (20) in einem Ölbehälter (21) angeordnet sind, so daß in den Perforationen oder Löchern des Bandes abgelagerte Verunreinigungen zu der Außenseite des Bandes geholt werden.

9. Vorrichtung nach Anspruch 8, dadurch gekennzeichnet, daß die Preßeinrichtungen eine Ölaustragsdüse (71), die mit einer Umkehr- oder Umlenkeinrichtung (14) für das Endlosband und mit der Innenseite des Endlosbandes (11) verbunden ist und die dazwischen einen keilförmigen Raum (49) definiert, und Einrichtungen (75, 77, 79) für das Zuführen von Öl mit erhöhtem Druck zu der Ölaustragsdüse enthalten.

10. Vorrichtung nach einem der vorausgehenden Ansprüche, dadurch gekennzeichnet, daß die flüssigkeitsliefernde Einrichtung Einrichtungen (80, 81, 82) zum Spülen des Endlosbandes (11) mit Öl vor oder in Verbindung mit dem Freilegen des Endlosbandes enthält.

11. Vorrichtung nach einem der vorausgehenden Ansprüche, dadurch gekennzeichnet, daß die Saugeinrichtungen (27—29, 31, 32) zum Saugen von Luft weiter durch einen zweiten Teil oder Teilabschnitt (12) des Endlosbandes angeordnet sind, wobei die flüssigkeitsliefernde Einrichtung (21) so ausgebildet ist, daß sie Verunreinigungen aufnehmendes Öl (20) dem zweiten Teil oder Teilabschnitt (12) zuführt.

12. Vorrichtung nach einem der vorausgehenden Ansprüche, dadurch gekennzeichnet, daß das Endlosband (11, 12) und die Umkehr- oder Umlenkeinrichtung (13, 14) in der Form einer getrennten austauschbaren Kassette vorliegen.

13. Vorrichtung nach einem der vorausgehenden Ansprüche, dadurch gekennzeichnet, daß sie Einrichtungen (21) zum Auffangen von aus dem Endlosband (11, 12) entferntem verunreinigtem Öl, Einrichtungen (83—85, 87) zum Abtrennen der Verunreinigungen in dem ausgefangenen Öl und Einrichtungen (84, 89, 91) zur Rückführung des so gereinigten Öles zur der flüssigkeitsliefernden Einrichtung (21) aufweist.

14. Vorrichtung nach Anspruch 12, dadurch gekennzeichnet, daß die Abtrenneinrichtungen einen getrennten Sedimentationsbehälter (87) enthalten.

**Revendications**

1. Dispositif d'épuration d'air qui a été pollué ou contaminé par des particules de peinture au cours de la peinture par pulvérisation, comprenant au moins un moyen de filtrage comportant une bande de filtrage mobiles sans fin (11, 12), ledit moyen de filtrage étant de préférence destiné à constituer une partie d'une paroi dans une cabine de traitement; des moyens (41—44) d'entraînement contrôlés de la bande sans fin pour le mouvement circulaire autour d'au moins un premier et un second moyen de retour ou de déviation (13, 14, respectivement), une première partie ou portion exposée (11) de la bande étant disposée pour être traversée par l'air contaminé; des moyens d'alimentation en liquide (21; 80, 81, 82) pour alimenter au moins la partie ou portion exposée de la bande avec un liquide (20) absorbant les contaminants entraînés dans l'air passant à travers la bande; et des moyens (27—29, 31, 32) pour évacuer l'air pollué ou contaminé à travers ladite partie ou portion exposée, de telle sorte que les contaminants soient séparés de l'air passant au travers, caractérisé en ce que la bande sans fin (11, 12) est en un matériau essentiellement compact, mince ayant au moins un revêtement de polytétrafluoroéthylène, la bande ayant une surface essentiellement lisse et des perforations ou trous (10), passant directement au travers, répartis sensiblement uniformément sur la bande, pour le passage de l'air; en ce que le liquide est une huile telle qu'une huile de paraffine qui humidifie la bande; et en ce que des moyens de raclage (47; 71, 73—75, 77, 79) sont disposés pour agir en coopération avec la surface de la bande pour enlever de la bande les contaminants qui ont été séparés de l'air et retenus par l'huile.

2. Dispositif selon la revendication 1, caractérisé en ce que le matériau de la bande a une épaisseur de l'ordre de 1 mm.

3. Dispositif selon l'une quelconque des revendications précédentes, caractérisé en ce que la surface des perforations (10) est entre environ 2 et environ 20%, particulièrement entre environ 5 et environ 10% et de préférence, d'environ 7% de la surface opérationnelle de la bande (11, 12).

4. Dispositif selon l'une quelconque des revendications précédentes, caractérisé en ce que les perforations (10) ont une dimension d'ouverture maximale, en particulier un diamètre, qui est entre environ 0,5 mm et environ 3 mm, de préférence d'environ 1 mm.

5. Dispositif selon l'une quelconque des revendications précédentes, caractérisé en ce que ledit moyen de raclage (47) coopérant avec la bande sans fin (11, 12) est immergé dans l'huile (20) dans un récipient d'huile (21).

6. Dispositif selon l'une quelconque des revendications précédentes, caractérisé en ce que ledit moyen d'alimentation en liquide comprend un récipient (21) contenant l'huile (20), à travers laquelle passe la bande sans fin (11, 12).

7. Dispositif selon l'une quelconque des revendications précédentes, caractérisé en ce qu'il comporte un moyen de retour ou de déviation (14) pour la bande sans fin (11, 12) qui est, au moins en partie, immergé dans l'huile (20) dans un récipient d'huile (21) et qui est fait de telle sorte que lorsque la bande, après avoir été exposée et avoir ramassé les contaminants, passe sur le moyen de retour ou de déviation, le liquide soit forcé de traverser la bande à partir de son côté interne vers son côté externe, par suite de l'action de coincement entre le moyen de retour ou de déviation et le côté interne de la bande, de telle sorte que les contaminants déposés dans les perforations ou trous de la bande soient amenés vers l'extérieur de la bande.

8. Dispositif selon l'une quelconque des revendications précédentes, caractérisé en ce que des moyens sont disposés pour forcer le liquide à une pression accrue à travers la bande (11, 12) de son côté interne vers son côté externe, de préférence lorsque la bande passe à travers l'huile (20) dans un récipient d'huile (21), de telle sorte que les contaminants déposés dans les perforations ou trous de la bande soient amenés vers le côté extérieur de la bande.

9. Dispositif selon la revendication 8, caractérisé en ce que lesdits moyens de pression comprennent une buse de décharge de l'huile (71), qui communique avec un moyen de retour ou de déviation (14) pour la bande sans fin, du côté interne de la bande sans fin (11) et qui définit entre eux un espace en forme de coin (49), et des moyens (75, 77, 79) pour l'alimentation en huile à une pression accrue vers la buse de décharge de l'huile.

10. Dispositif selon l'une quelconque des revendications précédentes, caractérisé en ce que lesdits moyens d'alimentation en liquide comprennent des moyens (80, 81, 82) pour décrasser la bande sans fin (11) avec l'huile, avant ou en même temps que la bande sans fin est exposée.

11. Dispositif selon l'une quelconque des revendications précédentes, caractérisé en ce que lesdits moyens d'évacuation (27—29, 31—32) sont disposés pour aspirer l'air ultérieurement, à travers une seconde partie ou portion (12) de la bande sans fin, lesdits moyens d'alimentation en liquide (21) étant adaptés pour alimenter la seconde partie ou portion (12) en huile (20) absorbant les contaminants.

12. Dispositif selon l'une quelconque des revendications précédentes, caractérisé en ce que la bande sans fin (11, 12) et les moyens de retour ou de déviation (13, 14) se présentent sous la forme d'une cassette indépendante interchangeable.

13. Dispositif selon l'une quelconque des revendications précédentes, caractérisé en ce qu'il comprend un moyen (21) pour recueillir l'huile contaminée évacuée de la bande sans fin (11, 12), des moyens (83—85, 87) pour séparer les contaminants dans l'huile recueillie, et des moyens (84, 89, 91) pour recycler l'huile ainsi nettoyée vers le moyen d'alimentation en liquide (21).

14. Dispositif selon la revendication 13, caractérisé en ce que lesdits moyens de séparation comprennent un récipient de sédimentation séparée (87).

**0 045 729**

Fig.1

Fig.3

*Fig. 2*

*Fig. 4*

*Fig. 5*

*Fig. 6*